(19) Europäisches Patentamt / European Patent Office / Office européen des brevets

(11) **EP 3 417 691 B1**

(12) **FASCICULE DE BREVET EUROPEEN**

(45) Date de publication et mention de la délivrance du brevet:
**08.01.2025 Bulletin 2025/02**

(21) Numéro de dépôt: **18178343.2**

(22) Date de dépôt: **18.06.2018**

(51) Classification Internationale des Brevets (IPC):
**A01C 21/00** *(2006.01)*

(52) Classification Coopérative des Brevets (CPC):
**A01C 21/00**

(54) **FERTILISATION AZOTOBACTÉRIENNE SANS INOCULATION DES RÉSIDUS DE CULTURES**

STICKSTOFFBAKTERIEN-DÜNGUNG OHNE INOKULATION DER ERNTERESTE

AZOTOBACTER FERTILISATION WITHOUT INOCULATION OF THE CROP RESIDUE

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **21.06.2017 FR 1770661**

(43) Date de publication de la demande:
**26.12.2018 Bulletin 2018/52**

(73) Titulaire: **Polyor SARL**
**54000 Nancy (FR)**

(72) Inventeur: **CLAUDE, Pierre-Philippe**
**54000 Nancy (FR)**

(56) Documents cités:
EP-A1- 2 213 154     EP-A1- 2 281 427
EP-A1- 2 684 588     WO-A1-2017/210609

- MASON-JONES KYLE ET AL: ""Non-metabolizable" glucose analogue shines new light on priming mechanisms: Triggering of microbial metabolism", SOIL BIOLOGY AND BIOCHEMISTRY, PERGAMON, OXFORD, GB, vol. 107, 5 January 2017 (2017-01-05), pages 68 - 76, XP029919419, ISSN: 0038-0717, DOI: 10.1016/J.SOILBIO.2016.12.015
- KUNC F ET AL: "Biological decomposition of fulvic acid preparations | SpringerLink", FLORA MICROBIOLOGICE, 1 July 1976 (1976-07-01), pages 1 - 1, XP055892399, Retrieved from the Internet <URL:https://link.springer.com/article/10.1007/BF02876901#citeas> [retrieved on 20220216]

EP 3 417 691 B1

**Description**

## DOMAINE TECHNIQUE DE L'INVENTION

Fertilisation raisonnée en azote (N) et phosphore (P) des grandes cultures agronomiques telles que le blé et le colza d'hiver, et cela notamment par voie d'azotobactérisaton des résidus de culture cellulosiques au sol.

## ÉTAT DE LA TECHNIQUE

La fertilisation azotobactérienne nécessite (i) des outils de diagnostic du potentiel azotobactérien et (ii) l'augmentation du nombre d'azotobactéries en proximité des résidus de culture cellulosiques au sol (RCS) après enfouissement. A ce jour cette augmentation a surtout été menée par l'inoculation des RCS avant leur enfouissement avec des biomasses azotobactériennes endogènes (Claude et Fillion 2004 ; FR2833016 (A1)). Or, cette approche à la fertilisation azotobactérienne est problématiques du fait de sa logistique industrielle et agronomique impliquant le prélèvement d'échantillons de sols, l'obtention de souches azotobactériennes et leur production, ainsi que leurs formulation, conditionnement et acheminement.

Il existe pourtant une alternative, objet de la présente invention. En effet, si nous pouvions favoriser la migration chimiotaxique d'une partie des azotobactéries indigènes déjà présentes dans le sol vers la *résidusphère* (RDS ; i.e. environ 3 à 4 mm de part et d'autre des brins de résidus de culture cellulosiques après enfouissement) nous pourrions, en principe, s'attendre au même effet bioaugmentatif qu'apporte la susdite inoculation desdits résidus de culture au sol. Le document EP 2 213 154 décrit un procédé alternatif selon le préambule de la revendication 1.

Or, à ce jour, cette augmentation de la vitesse chimiotaxique des bactéries du sol n'a jamais été appréciée ou appliquée à la fertilisation azotobactérienne. Tien et al. 2016 mentionnent plusieurs exemples d'applications de la chimiotaxie, mais jamais afin de favoriser l'azotobactérisation desdits résidus de culture. Mason-Jones et Kuzyakov 2017 décrivent des analogues non-métabolisables utilisés pour l'étude de la dégradation de la matière organique du sol, mais non des résidus de culture, encore moins leur valorisation microbiologique en fertilisation azotobactérienne. Parales et Harwood 2002 mentionnent des molécules chimiotaxiques provenant de l'exsudation des racines mais non des résidus de culture au sol. De Souza et al. 2015 ne font aucune mention de PGPB (bactéries et non que les rhizobactéries) capables de migrer chimiotaxiquement vers de tels résidus de culture ; i.e. la chimiotaxie, si elle existe, est strictement rhizosphérique.

Favoriser cette migration (dérive) chimiotaxique des azotobactéries vers la RDS ne fait donc pas partie de l'état de l'art. Pourtant, différents composés peuvent en principe affecter cette chimiotrophie, à savoir (i) des oses et d'osides, et (ii) des préparations composées d'acides humiques et/ou fulviques (AHF) dans la mesure où elles sont sources de composés aromatiques de la famille des arènes, et (iii) des composés aromatiques de la classe des arènes a priori très impliqués dans l'écologie tellurique des azotobactéries (eg. Wu et al. 1987).

Cela dit, c'est à titre de substrats énergétiques que ces oses et osides attireront les bactéries du sol ; on parle alors de trophotaxie (néologisme) plutôt que de chimiotaxie. Or, cette trophotaxie n'est pas spécifiques aux azotobactéries, et pourrait tout autant servir à augmenter la biomasse fongique de la RDS et être contre-productive (cf. EP 2 845 906) à la fertilisation azotobactérienne raisonnée (FAR ; EP 17196251.7).

De plus, les préparations AHF sont actuellement préconisées à hauteur de -10 à -100 kg par hectare (Tableau A), ce qui est peu ou pas réconciliable avec la pratique actuelle d'azotobactérisation des résidus de culture consistant à apporter moins d'un litre de produits par hectare (eg. Claude et Fillion 2004). De plus, la plupart de ces compositions ne sont pas constituées d'acides H-F d'origine édaphique (i.e. sols arables) mais plutôt tellurique (dépôts miniers ; Allard 2006) ; elles sont donc essentiellement étrangères (xénobiotique) et pourraient à terme altérer (perturber) le fonctionnement biologique du sol lorsqu'appliquée à de telles doses-hectare (i.e. -10 à -100 kg).

Enfin, l'action chimiotaxique sur les azotobactéries des acides phénoliques provenant de la dégradation des résidus de culture par saprophytisme fongique n'est pas reconnue. Par exemple, De Souza et al. 2015 décrivent leur libération par les racine (vivantes) à titre de signal moléculaire, ou encore par des composés xénobiotiques. *In fine,* leur utilisation en agriculture est aujourd'hui limitée aux applications concernant les symbioses et autres types d'interactions plantes x microorganismes, voire en bioremédiation de sols contaminés.

**Tableau A :** Quelques exemples de matières fertilisantes à base d'acides humiques et fulviques (AHF) proposés en agricultures, soit pour des applications localisées - généralement sur ou dans raie de semis, ou à titre de fumure de fond - généralement appliquées « à la volée » au sol. Pour l'essentiel il s'agit de grandes cultures ou de cultures maraichères « plein champs ». A noter que les quantités équivalentes d'AHF par hectare à titre de fumure de fond sont de l'ordre d'une ou quelques centaines de kg.

| produit/marque | application | quantité apliquée | concentration AHF(%) | eq AHF/ha mini (kg) | eq AHF/ha maxi (kg) | référence/fabricant | pays |
|---|---|---|---|---|---|---|---|
| Fertimus™ | localisé / raie de semis | 50 à 80 L/ha | 11 | 5,5 | 8,8 | humus-biotech.com | FR |
| Humifirst™ | localisé / raie de semis | 25 à 50 L/ha | 15 | 3,8 | 4,6 | tradecorp.fr | FR |
| Humonia™ | localisé / raie de semis | 30 à 100 L/ha | 25 | 10 | 20 | agronutrition.com | FR |
| Humix™ | localisé / raie de semis | 4 à 12 kg/ha | 100 | 4 | 12 | tagrow.com | US |
| Humiliq™ | localisé / raie de semis | 6 à 10 L/ha | 25 | 4 | 12 | tagrow.com | US |
| Liquid Humus™ | localisé / raie de semis | 25 à 45 L/ha | 18 | 4,5 | 8,1 | bioprotan.com | EU |
| Humic Solid™ | localisé / raie de semis | 5 à 12 L/ha | 100 | 5 | 12 | triferto.eu | EU / Bénélux |
| Humic Liquid™ | localisé / raie de semis | 25 à 100 L/ha | 20 | 5 | 20 | triferto.eu | EU / Bé-nélux |
|  |  | **moyenne locali-sée** | **39** | **5** | **12** |  |  |
| Activ80-HP™ | à la volée (fumur de fond) | 45 à 122 kg/ha | 80 | 36 | 90 | blackearth.com | US |
| CHI™ Granule | à la volée (fumur de fond) | 47 à 118 kg/ha | 85 | 40 | 100 | canadianhumaliteinternational.com | CA |
| Humic DG™ | à la volée (fumur de fond) | 45 à 225 kg/ha | 70 | 32 | 158 | andersonshumates.com | US |
| Black Gypsum™ DG™ | à la volée (fumur de fond) | 225 à 560 kg/ha | 21 | 47 | 105 | andersonshumates.com | US |
| HuMates™ Pow-der | à la volée (fu-mur de fond) | 100 à 500 kg/ha | 22 | 22 | 110 | fertilefields.co.nz | NZ |
|  |  | **MOYENNE FUMURE DE FOND** | **56** | **35** | **113** |  |  |

EP 3 417 691 B1

Sigles et définitions

Acides humiques et fulviques (AHF) : polymères à haut poids moléculaires composant l'humus du sol, chargés négativement, de couleur noire/brun foncé, et issus de la condensation oxydative de monomères phénoliques. Leur structure présente des noyaux aromatiques et des chaînes aliphatiques et groupements fonctionnels à caractère acide, avec ou sans polymérisation.

Acides phénoliques (aPhen) : composé organique possédant au moins une fonction carboxylique et un hydroxyle phénolique, voire plus particulièrement dérivé de l'acide benzoïque ou cinnamique.

Analogue non métabolisable : analogue d'un substrat énergétique qui n'est plus métabolisable en raison d'une modification de sa structure, mais demeurant néanmoins chimiotaxiques.

Arènes (aromatiques) : hydrocarbures insaturés possédant au moins un cycle benzénique (benzène) constituant ici l'essentiel des monomères d'acides phénoliques composant les AHF.

Azotobactéries : bactéries du sol possédant l'opéron génomique *nif*H - composante essentielle de l'enzyme nitrogenase, et capables de diazotrophie *(alias fixation* biologique par réduction chimique de l'azote diatomique) en présence de substrats énergétiques.

Chimiotaxie : attraction et déplacement actif de cellules bactériennes vers un agent chimiotaxique attractif. Cet agent chimiotaxique agit sur des récepteurs cellulaires (CheB et CheR ; Tien et al. 2016, Szurmant et al. 2004) capable de réguler en ce sens les flagelles motrices de la cellule.

CTXsol ; teneurs indigènes en *agents chimiotaxiques* (CTX) de sols arables, et plus particulièrement ici exprimés en uM-aPhen ou mg-aPhen/kg-sol ou encore kg-aPhen/ha.

CTXrcs ; *idem* à CTXsol, sauf que ces teneurs en CTX sont immédiatement attribuables à l'enfouissement des RCS ; CTXsol et CTXrcs sont donc nécessaire corrélés. CTXrcs dépendra donc dans une certaine mesure de durée de demi-vie (t50) des aPhen *in situ.*

dCTX ; apport de CTX (kg-CTX/ha) directement au RCS fonction de kw au sens de la présente invention fonction et respectant la structure de corrélation entre CTXsol et CTXrcs.

Fertilisation azotobactérienne raisonnée (FAR) : mode de fertilisation azoto-phosphorique (NP) pour grandes cultures agronomiques comportant non seulement le calcul prévisionnel de la dose d'engrais NP, son fractionnement et le pilotage intra-saisonnier selon l'état nutritionnel de la culture, mais aussi l'azotobactérisation des résidus de culture cellulosiques au sol.

kw ; ratio entre les signaux chimiotaxique décrit formellement comme kw = [CTXrcs + dCTX] / CTXsol et analogue à celui décrivant la loi de Weber (Mesibov et al. 1974, Valdimirov et al. 2009)

Pédosphère (PDS) : zone du sol à l'exclusion des résidusphères (RDS ; *infra)* et des rhizosphères (RZS) ; alias « bulk soil » (angl.)

Pulvérisation liquide : mise en contacte d'une solution, bouille ou tout autre milieux aqueux avec une surface plane plus ou moins régulière, par exemple ici lesdits résidus de culture au sol.

Pulvérisation solide : mise en contacte d'une matière pulvérulente avec une surface plane plus ou moins régulière, par exemple ici lesdits résidus de culture au sol.

Résidusphère (RDS) : zone du sol entourant les brins de résidus de cultures cellulosiques après enfouissement s'étendant latéralement sur 3 à 4 mm de part et d'autre desdits brins.

Vectorisation (cf. EP10 366 006.4) : mise en contact des RCS et d'une substance sans solution aqueuse (pulvérisation liquide) ou une matière pulvérulente (pulvérisation solide), mais via une semence (eg. *Poacea*) dont le poids de mille grains est de 500 à 3 000 mg et la doses-hectare entre 15 et 40 kg.

## DIVULGATION DE L'INVENTION

*Problème technique*

Le problème technique est dû à la complexité agronomique, industrielle et logistique d'assurer la réintroduction de biomasses bactériennes endogènes, voire indigènes, en proximité des résidus de culture au sol. La fertilisation azotobactérienne nécessite l'augmentation du nombre d'azotobactéries en proximité des résidus de culture enfouis (RDS). Cela se fit jusqu'à ce jour par inoculation desdits résidus avant leur enfouissement. Or, lesdites azotobactéries doivent impérativement être endogènes et, le plus souvent, copiotrophes ; il faut donc faire appel à des procédés d'obtention spécifiques (eg. EP10366005.6, EP10366002.3, FR2833016A1, etc.), procédés parfois difficilement mise en oeuvre. Pour des raisons logistiques et bioindustrielles, les doses hectare de biomasses (azoto)bactériennes sont assez petites, de l'ordre de quelques dizaines de grammes tout au plus. Enfin, il y a aussi des complications liées à la conservation et l'acheminement de ces biomasses, soit sous forme de consortia, soit isolées et produites pour une parcelle ou îlot particulier.

*Solution technique*

La solution technique consiste à favoriser in situ la migration chimiotaxique des bactéries du sol, et avantageusement et surtout des azotobactéries, vers la résidusphère issue de la décomposition in situ de résidus de culture cellulosiques au sol enfouis en surface de la couche arable. Concrètement, l'invention propose un procédé de fertilisation azotobactérienne pour grandes cultures agronomiques sans inoculation des résidus de culture cellulosiques répandus au sol après la récolte de la culture précédente comportant la mise en contacte exprès d'agents chimiotaxiques et des susdits résidus de culture au sol avant enfouissement et caractérisé en ce que lesdits agents chimiotaxiques permettant un mouvement des azotobactéries du sol vers la résidusphère sont choisis parmi l'une quelconque des catégories suivantes ;

- des analogues non-métabolisables d'ose et d'osides
- des préparations composées d'acides humiques et/ou fulviques (AHF)
- des composés aromatiques de la classe des arènes
  et en ce que les susdits agents chimiotaxiques sont apportés aux et mis en contact avec les susdits résidus de culture avant leur enfouissement par pulvérisation liquide ou solide, ou encore par vectorisation, et cela en quantités réduites, à savoir ;
- de 0,5 à 10 kg par hectare pour ce qui est des analogues non-métabolisables d'ose et d'osides, et avantageusement de 1 kg par hectare
- de 0,5 à 5 kg par hectare pour ce qui est des préparation composées d'acides humiques et/ou fulviques (AHF), et avantageusement de 1 kg par hectare
- de 0,1 à 2,5 kg par hectare pour ce qui est des composés aromatiques de la classe des arènes, et avantageusement de 1 kg par hectare.

Selon un mode de réalisation, ce procédé de fertilisation azotobactérienne est aussi caractérisé en ce que ;

- les analogues non-métabolisables d'ose et d'osides sont choisis parmi un groupe comprenant (i) a-methyl-D-glucoside et/ou le 2-deoxy-D-glucose, (ii) 2-deoxy-D-ribose)et (iii) 2-deoxy-galactose à titre d'analogues non métabolisable du glucose, du ribose et du galactose, respectivement,
- les préparations composées d'acides humiques et/ou fulviques (AHF) sont choisi parmi un groupe comprenant des préparation solides et granulaires épandables au champs et donc les teneurs en AHF sont comprises entre 15 et 90% p/p
- les composés aromatiques de la classe des arènes sont choisis parmi un groupe comprenant des acides phénoliques monomériques et/ou leurs sels tels que l'acide vanillique, coumarique, férulique, benzoïque, caféique et syringique ainsi que le protocatechuate, 4-hydroxybenzoate et le catéchol.

Les résidus de culture cellulosiques répandus au sol proviennent eux des cultures précédentes de céréales, notamment le blé tendre d'hiver, de colza, de maïs-grain et de sorgho, voire de tournesol, tandis que les grandes cultures agronomiques sont elles choisies parmi un groupe comprenant les céréales d'hivers, y compris notamment le blé tendre d'hiver, le colza, le lin, voire les cultures intermédiaires pièges à nitrates (cipan) non-Fabaceae. Notons enfin que l'enfouissement desdits résidus de culture s'effectue par labourage et préparation du lit de semence, voire plus avantageusement par TCS (techniques culturales simplifiées) sur 8 à 15 cm de profondeur, à l'exclusion cependant du semis direct.

Hormis l'application d'analogues non-métabolisables d'oses et d'osides, l'invention peut donc être réalisée à l'aide de compositions d'acides humiques et/ou fulviques appliquées directement audits résidus de culture à des taux bien inférieurs à ceux pratiqués lorsque ces mêmes compositions sont appliquées à la volée au champ à titre de fumure. En effet, des doses hectare de l'ordre d'une centaine de kg sont requises pour de telles fumures appliquées à la volée (Tableau A), tandis que si appliquées directement audits résidus de culture quelques kg suffiront. Cela provient du fait que ces AHF sont constituées de précurseurs de ou d'acides phénoliques monomériques, dont certaines sont chimiotaxiques.

Quant au troisième mode de réalisation, à savoir l'application de telles acides phénoliques (monomériques) et arènes (aromatiques) directement aux susdits résidus de culture. Selon Lopez-de-Victoria et Lovell 1993 les composés aromatiques (arènes) d'origine végétales, i.e. des racines, sont chimiotaxiques à l'égards d'*Azospirillum* spp. Plusieurs composés ont déjà été essayés en ce sens, à savoir l'acide benzoïque, l'acide parahydroxybenzoïque ou acide 4-hydroxybenzoïque, l'acide protocatéchique ou acide 3,4-dihydroxybenzoïque, et le pyrocatéchol (catéchol) impliqué dans de nombreuses synthèses organiques, y compris de l'humus du sol. Fait important ; ces composés aromatiques n'ont jamais été sciemment appliqués à de telles concentrations aux susdits résidus de culture à titre d'agents chimiotaxique, pour cause.

*Avantages apportés et activité inventive*

L'azotobactérisation des RCS est effectuée sans inoculation, ce qui est d'un point de vue réglementaire, industrielle, logistique et agronomique bien plus simple. De plus, l'utilisation de préparations à base d'AHF peuvent maintenant être effectué à des doses hectare réduites d'environ 90% à 99% par rapport à l'état de l'art (cf. Tableau A).

## BRÈVE DESCRIPTION DES FIGURES ET DESSINS

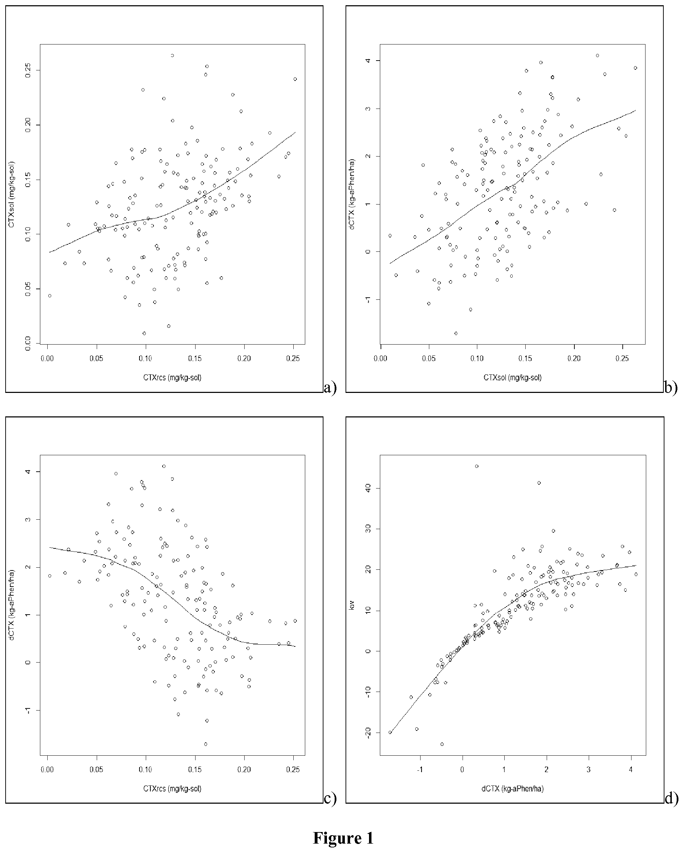

**Figure 1** : Simulation des conditions d'applications des gammes des dCTX selon la première revendication. La corrélation entre CTXrcs et CTXsol est bel et bien respectée (a). La progression de CTXsol, à titre de « bruit de fond » (cf. loi de Weber ; Vladimirov et al. 2009, Mesibov et al. 1973) augmente dCTX (b), tandis que CTXrcs diminue dCTX (c) préconisé. In fine, plus dCTX est important, plus l'effet chimiotaxique, kw, l'est aussi (d).

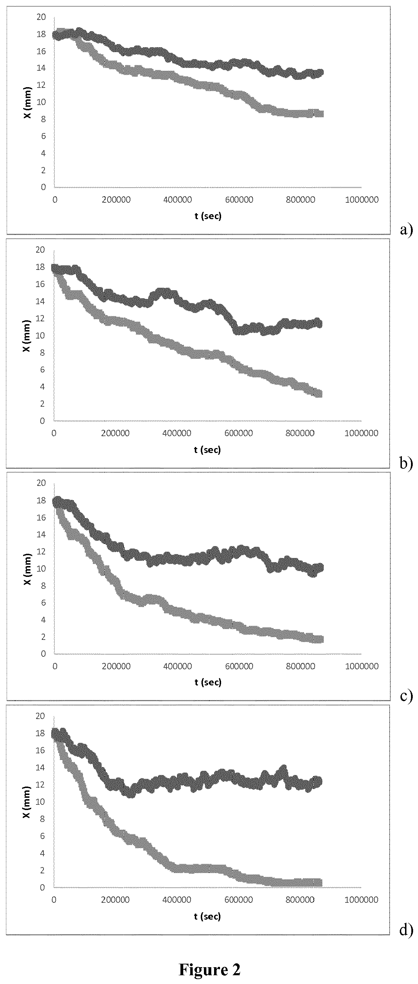

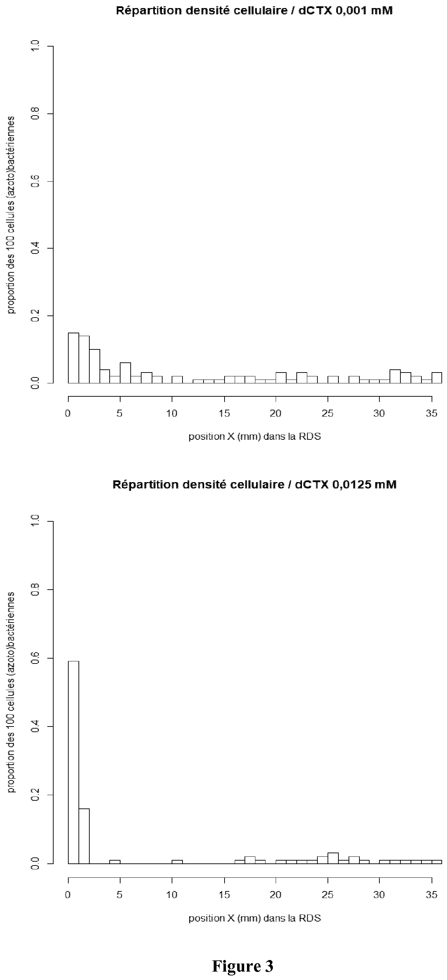

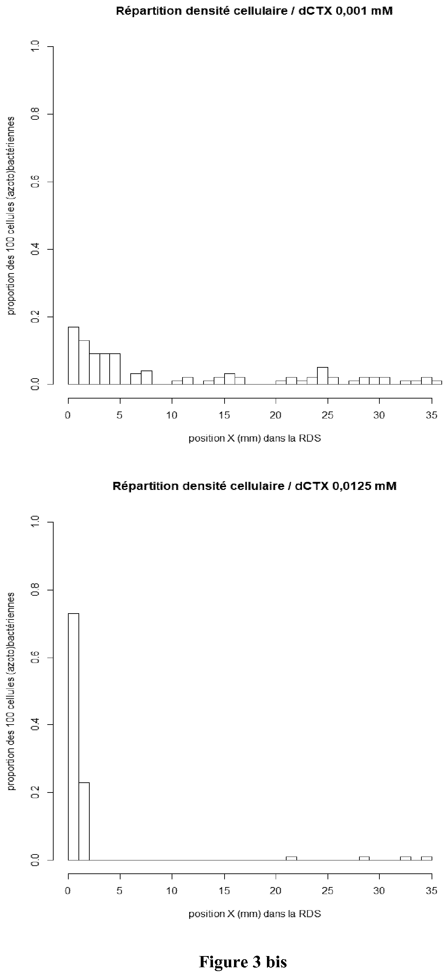

**Figure 2** : Position moyenne de 100 azotobactéries après 10 jours (864000 secondes) de dérive migratoire modélisées avec RapidCell™ (Vladimirov et al. 2008, 2009 et 2010). Ce contingent de 100 azotobactéries migre d'une position distale mi-chemin (18 mm) entre deux RDSs plus ou moins près de la surface d'un des brins de RCS (cf. Figure 3) ayant reçu dCTX à hauteur de 100 g (0,001 uM ; courbes supérieures) ou 1,25 kg (0,0125 uM ; courbes inférieures). [Nb. Sans dCTX, les contingents de 100 cellules culbutent sans parcourir (dériver) et demeurent, en moyenne, aux alentours de 18 mm, leur position initiale. Cette courbe témoin a été réalisée (sans gradient) mais n'a pas été rapportée ici afin de ne pas surcharger la figure.]

**Figure 3 et 3 bis :** Histogrammes de répartition de la densité des cellules bactériennes initialement en position distale, i.e. à mi-distance (X = 18 mm) des deux brins de résidus de culture, après 3 jours (4320 +1 minutes ; Figure 3) et 10 jour (14400 + 1 minutes ; Figure 3-bis) de migration chimiotaxique à travers un gradient gaussien initié à la surface des résidus de culture (X = 0 mm) à hauteur de (dCTX = ) 0,001 mM et 0,0125 mM d'un quelconque agent chimiotaxique (cf. Tableaux 1 et 2). Les répartitions pour dCTX = 0,00 mM sont en moyenne parfaitement plane à travers X (mm) et ne sont pas affichées.

## MODE DE RÉALISATION PRÉFÉRÉ DE L'INVENTION

L'invention est réalisable en agronomie par simple pulvérisation, liquide ou solide, voire par vectorisation, de quantités (réduites par rapport à l'état) de l'art d'agents chimiotaxiques. L'invention est dans le domaine de la fertilisation raisonnée et azotobactérienne telle que proposée initialement par Claude et Fillion 2004 et apportera *ad minima* les mêmes résultats escomptés en termes d'augmentation de rendements et de meilleure utilisation de l'azote.

Les analogues non métaboliques, AHF et sels de composés aromatiques tels que les acides phénoliques sont dissouts dans un milieu aqueux à même le bac d'un pulvérisateur agricole conventionnel afin de forme une bouillie pulvérisable. Ce mode de mise en contact par pulvérisation liquide des susdits agents chimiotaxiques et des résidus de culture au sol est préférable. La mise en contact par pulvérisation solide de ces agents suppose qu'ils soient préalablement intégrés à une matière pulvérulente ou granulaire à titre de fumure de fond, cette dernière devant être suffisamment abondante pour permettre son épandage mécanique au champ. Enfin, il est aussi possible, en accord avec EP10366006.4 (supra « vectorisation »), d'intégrer par traitement de semences lesdits agents chimiotaxiques à une dose-hectare de semences non-Fabaceae (*Poaceae*) suffisamment nombreuses (et donc petites) de manière à assurer ainsi la vectorisation de ces agents vers les résidus de culture au sol.

## APPLICATIONS BIOINDUSTRIELLES ET AGRONOMIQUES

### *Faisabilité agronomique*

Le contacte entre la RDS et l'ensemble des bactéries du sol est extensif. Il est donc possible de provoquer la chimiotaxie de ces bactéries indigènes vers les résidus de culture après enfouissement. Le poids de résidus de culture x leur densité apparente (~0,20) x dimension latérale de la RDS (-3 à 4 mm) implique que les 1% p/p de résidus de culture enfouis occupent -5% du volume du sol, mais aussi que la RDS elle occupe parfois plus de 10 voire 20% du volume du sol sur 10 à 12 cm de profondeur immédiatement post-enfouissement. Étant donné qu'il y a environ 500 kg de bactéres / hectare, ladite RDS est en contact avec -100 kg de bactéries / hectare, dont une certaine partie (appréciable) est nécessairement diazotrophe (eg. Izquierdo et Nüsslein 2006). Faire migrer par chimiotaxie qu'une portion restreinte de celle-ci (0,1 à 1%) sur *quelques mm* vers ladite RDS est donc faisable.

De plus, les molarités effectives d'agents chimiotaxiques apportées aux RCS, oses, osides ou arènes, sont de l'ordre des millimoles (oses, osides) et micromoles (arènes) et donc gérables en agronomie. Il existe des molécules, oses, osides et arènes, dont les concentrations chimiotaxiques effectives (optimales ou critiques) sont réconciliables avec l'apport de quelques kg ou plus aux quelques 5 à 10 tonnés de résidus de culture par hectare. En ce sens, les arènes sont pondéralement les plus performantes ; l'action chimiotaxique de certaines de ces molécules sur la motilité d'azotobactéries telles qu'*Azospirillum* spp. et *Azotobacter* spp. est décrite dans Lopes-de-Victoria et Lovell 1993 et Haneline et al. 1991.

Les compositions génomiques des opérons cheB et cheR des bactéries diazotrophes et non-diazotrophes diffèrent. En effet, à l'aide de bases de données génomiques proposées par Gaby et Buckley 2014 et Heller et al. 2014, il est possible de démontrer que les constantes de méthylation ↔ déméthylation des opérons chimiotaxiques cheR et cheB diffèrent entre azotobactéries et bactéries non-diazotrophes. Ces constantes différentes vont nécessairement agir sur la motilité chimiotaxique des azotobactéries vers la RDS, comme nous le rappel l'équation de Clausznitzer et al. 2014 ;

$$dm/dt = gR \cdot (1-A) - gB \cdot A^3$$

lorsque dm/dt est la cinétique de modification du récepteur chimiotaxique, A est le niveau moyen d'activité du complexe chimiotaxique Che et, encore une fois, gR et gB les constantes de méthylation ↔ déméthylation des opérons cheR et cheB (Szurmant et Ordal 2004), respectivement. A noter que la valeur de A est ici à la puissance 3 ($A^3$) ce qui implique une variation très dynamique de la susdite cinétique.

Il est donc possible d'affecter différemment à l'aide desdits agents chimiotaxiques ces deux types de bactéries. Cela implique que le comportement chimiotaxique des azotobactéries est lui aussi différent des bactéries non-diazotrophes, et qu'il est ainsi possible d'augmenter le contingent d'azotobactéries dans la RDS.

Enfin, les modèles mathématiques décrivant la migration spatio-temporelle chimiotaxique de bactéries indiquent que de *légères* modifications des susdits coefficients suffisent à augmenter migration des azotobactéries vers la RDS. Plus particulièrement, une augmentation très modeste du coefficient chimiotaxique « X » (Lauffenburger et al. 1982) par voie d'augmentation de la concentration « So » de l'attractif chimiotaxique est suffisante pour augmenter la vitesse et la distance de migration spatio-temporelle des bactéries du sol. Selon Lauffenburger et al. 1982 (op. cit. eq. 6) ;

$$Jb = -u \cdot [\partial b/\partial x] + b \cdot X \cdot [\partial s/\partial x]$$

lorsque Jb est le flux des (azoto)bacteries vers la RDS enduite d'agents chimiotaxique, et X le susdit coefficient (positif) chimiotaxique ; b et s indiquent les types de (azoto)bactéries et « substrats » (ou plutôt ici d'agent chimiotaxique non nécessairement trophotaxique), et u la diffusivité des cellules bactériennes en absence de.

Notons cependant l'interaction b · X nous indiquant que la migration des (azoto)bactéries va en *s'accélérant* à mesure qu'elles se rapprochent de la RDS via l'action chimiotaxique des composés eux-mêmes. C'est vraisemblablement cette interaction qui permet des vitesses linéaires instantanées de l'ordre de 20 à 40 um/sec en milieux aqueux, y compris donc dans la solution du sol. Cette interaction [b · X] est appréciable, bien indirectement à ce stade c'est vrai, via les quelques données obtenues de Johansen et al. 2002 pour des bactéries en milieux aqueux. C'est donc bel et bien l'accélération résultante de l'interaction [b · X] qui est la mieux corrélée avec la susdite vitesse chimiotaxique et non simplement la croissance de la biomasse cellulaire.

### *Faisabilité du mode d'application*

Il est possible de modéliser l'application agronomique des gammes de dCTX selon revendications, soit de 0,100 à 2,50 kg d'aPhen par hectare apportées directement aux RCS avant leur enfouissement. Or, ces dCTX doivent être commensurables avec les teneurs en aPhen des sols (CTXsol) et de RCS (CTXrcs). A ce titre, les données de Martens et al. 2000 et 2002 permettent de calculer que les azotobactéries sont a priori en présence d'environs 1 uM d'aPhen par hectare, soit environ l'équivalent de 100 g d'aPhen dans la solution du sol.

Pour preuve. Un sols arable moyen contiendra environs de 5 à 25 mg-aPhen/kg selon la composition monomérique retenue (cf. Martens et al. 2002 bis), 10 mg/kg étant une bonne première approximation dans la plupart des cas. Puisqu'à peine 1% de CTXsol est hydrosoluble (*cf.* Whitehead et al. 1983, Soil Biol. Biochem. 15(2) : 133-136) et immédiatement accessible aux azotobactéries, environ 100 g, soit 1 mole d'aPhen par hectare, ou encore une concentration ~1 uM (i.e. un hectare représente 1 000 000 dcm$^3$ de sol arable en surface sur 10 cm de profondeur).

Pour une situation agronomique comprenant l'enfouissement d'au moins 5 à 8 t-RCS/ha, avantageusement pailleux mais aussi souvent de maïs-grain (Claude et Fillion 2004), le plus souvent dans le cadre d'une fertilisation azotobactérienne. Les RCS sont eux environ 10x plus riches en aPhen que les sol (données Martens et al. 2000 et 2002, et Shindo et al. 1979), enfouis sur 10-12 cm de profondeur et représentent a priori 0,5 à 0,8 % p/p de la masse de sol par hectare, mais de 2,5 à 4 % de son volume en raison d'une densité apparente des RCS de l'ordre de 0,2 à 0,25 (contre - 1,25 pour le sol), la RDS s'étendant ainsi à 3 ou 4 mm de part et d'autre de chaque brin de RCS, le volume de la PDS occupé par celle-ci est bel et bien d'environ 10%.

Une azotobactérie tellurique est donc, grosso modo, continuellement en présence d'environ 1 uM d'aPhen provenant à part égale de la RDS et de la PDS, d'où a priori une certaine immobilité (cf. « l'âne de Buridan ») de ces cellules ayant pu autrement migrer plus massivement vers ces sources de substrats énergétiques que sont les RCS. Pour évaluer par modélisation l'impact agronomique des dCTX il faut donc comparer la somme des aPhen (CTX) provenant des RCS (CTXrcs) et de dCTX et l'ensemble des aPhen hydrosolubles libérées par le sol (CTXsol) sur 7 à 10 jours, soit approximativement la durée de leurs demi-vies in situ (Blum et Shafer 1980, Cipollini et al. 2012, Kumari et al. 2016).

Pour ce faire, je me réfère au ratio, kw = [CTXrcs + dCTX] / CTXsol, ratio analogue à celui de Weber (Mesibov et al. 1974, Valdimirov et al. 2009). Or, étant donné que les aPhen sont que faiblement hydrosoluble et généralement plus récalcitrantes que les composés glucidiques, la décomposition des RCS va entrainer un enrichissement ponctuel en aPhen de la PDS ; i.e. CTXsol et CTXrcs sont partiellement corrélées, soit à hauteur de 60% (coefficients de corrélation) selon les données de Martens et al. 2000, 2001 et 2002, et Shindo et al. 1979.

Puisque la loi de Weber semble s'appliquer à la chimiotaxie bactérienne (Vladimirov et al. 2009, Mesibov et al. 1973), l'augmentation de CTXsol fera nécessairement progresser dCTX ; l'augmentation de CTXrcs fera, au contraire, régresser dCTX.

Le script R (Tableau A) tient compte de cette « structure de corrélation » entre CTXsol, CTXrcs et dCTX ; ces simulations sont rapportées graphiquement à la Figure 1. Notons que pour des dCTX de -100 g/ha (0,001 mM), kw est de l'ordre de 2 à 3, et de 10 à 12 pour des dCTX -1,25 kg/ha (0,0125 mM), le dCTX inférieurs à 0,00 étant que spéculatifs présupposant une certaine sur-immobilisation d'aPhen. Les valeurs de kw sont donc environs 3 à 4 fois plus importantes pour les dCTX de 1,25 kg/ha ; cette augmentation relative par rapport aux dCTX de 100 g/ha est à comparer à celle des répartitions de densité cellulaire au sein de la RDS (i.e. X (mm) - 3 à 4 mm) présentée à la Figure 3 (*infra*) à peu près du même ordre. La fonction R *comode* (*mc2d* (Poulliot et al. 2016) implémente la méthode décrite par Iman et Conover 1982 permettant d'imposer la susdite structure de corrélation à un jeu de données aléatoires distribuée normalement, ici selon la fonction R *rnorm.*

***Modélisation du mode d'action*** (modèle RapidCell™)

Le modèle RapidCell™ (Vladimirov 2008, 2009 et 2010 ; http://www.rapidcell.net/) simule le comportement natatoire de cellules bactérienne en 2D avec des temps de course (« run ») et de culbutage (« tumble ») réalistes, y compris par diffusion rotationnelle. Des contingents de pluricellulaire sont ainsi modélisable, soit ici 100 cellules. RapidCell™ reproduit correctement la haute sensibilité de la voie chimiotactique (expériences FRET) en intégrant des moteurs flagellaires multiples ; leur nombre (ici, 12 ; cf. Hofer 1944, Rhodes 1965) affecte les temps de fonctionnement et de culbutage. L'application de RapidCell™ en milieu tellurique suppose une répartition non anisotropiques des colonies Azotobactériennes (Nunan et al. 2003) et que la présence d'obstacles (particules de sol, agrégats, etc.) n'empêchant pas la dérive des azotobactéries distales la RDS. Nguyen et al. 2016, dans un contexte tout différent - c'est vrai, démontra que des bactéries peuvent franchir de tels obstacles dans près de 75% des cas. De plus, une telle modélisation in situ sur plusieurs jours (10) suppose des demi-vies de monomère d'aPhen de l'ordre de quelques jours, voire plus (cf. Blum et Shafer 1980, Cipollini et al. 2012, Kumari et al. 2016 et Wang et al. 2016 - « Environmental behavior of phenolic acids dominated their rhizdeposition in boréal poplar plantation forest soils » J. Soils Sédiments 16 : 1858-70).

**Tableau A** : Code R du modèle « CTX » pour simuler l'application d'une gamme de dCTX selon la présente invention sur le ration kw = [CTXrcs + dCTX] / CTXsol tout en respectant la structure de corrélation prédéfinie entre CTXrcs, CTXsol et dCTX est imposée à des distributions normales des ces trois variables selon la méthode proposée par Iman et Conover 1982.

```r
library("mc2d", lib.loc="~/R/win-library/3.4")
library("Matrix", lib.loc="~/R/win-library/3.4")
library("corpcor", lib.loc="~/R/win-library/3.4")

rm(list=ls())

n <- 51

CTXsol <-    rnorm(n, mean=.125, sd=.05)
CTXrcs <-    rnorm(n, mean=.125, sd=.05)
 dCTX   <-   rnorm(n, mean=1.25, sd=1.15)

x <- matrix(1:9, nrow=3, ncol=3, byrow=TRUE)
x <- Diagonal(3)

x[1,2] <- .60
x[1,3] <- .67
x[2,3] <- -.67

corr <- matrix(forceSymmetric(x), ncol=3)
corr
is.positive.definite(corr, tol=1e-8)
corr <- make.positive.definite(corr, tol=1e-8)
corr <- cov2cor(corr)
corr
is.positive.definite(corr, tol=1e-8)
mat1 <- cbind(CTXsol, CTXrcs, dCTX)
mat2 <- cornode(mat1, outrank=FALSE, target=corr, result=TRUE, seed=NULL)

cor(mat2[,1], mat2[,1])
cor(mat2[,1], mat2[,2])
cor(mat2[,1], mat2[,3])
cor(mat2[,2], mat2[,3])

CTXsol <-    mat2[,1]
CTXrcs <-    mat2[,2]
  dCTX <-    mat2[,3]

for (i in 1:n)

{

CTXs <- as.numeric(CTXsol[i])
CTXr <- as.numeric(CTXrcs[i])
   d <- as.numeric(dCTX[i])
  kw <- as.numeric((d+CTXr)/CTXs)

x1 <- matrix(c(CTXs, CTXr, d, kw), ncol=4)
y1 <- data.frame(x1)
write.table(y1, file = "dCTX", append = TRUE, sep="\t", col.names= FALSE, dec=".")

}

dataCTX <- read.table(file = "dCTX",  header = FALSE, skip=0,  sep = "\t")
scatter.smooth(dataCTX[,3], dataCTX[,2], type= "p", family = c("gaussian"), xlab = "CTXrcs", ylab = "CTXsol")
scatter.smooth(dataCTX[,2], dataCTX[,4], type= "p", family = c("gaussian"), xlab = "CTXsol", ylab = "dCTX")
scatter.smooth(dataCTX[,3], dataCTX[,4], type= "p", family = c("gaussian"), xlab = "CTXrcs", ylab = "dCTX")
scatter.smooth(dataCTX[,2], dataCTX[,5], type= "p", family = c("gaussian"), xlab = "CTXsol", ylab = "kw")
scatter.smooth(dataCTX[,3], dataCTX[,5], type= "p", family = c("gaussian"), xlab = "CTXrcs", ylab = "kw")
scatter.smooth(dataCTX[,4], dataCTX[,5], type= "p", family = c("gaussian"), xlab = "dCTX", ylab = "kw")
```

Le gradient d'attractifs peut être choisi parmi 8 formes prédéfinies, ou définies par l'utilisateur ; j'ai opté pour un gradient gaussien à travers la PDS sur une distance de 18 mm à mi-chemin entre deux brins de RCS. Le gradient gaussien. Nb. Formellement, le gradient gaussien à travers X (mm) est défini par Valdimirov et al. 2008 comme $S(x) = 10K \cdot \exp(-(X-10)^2/(2 \cdot \sigma^2))$, les paramètres $\sigma = 3.33$ et $K=10^{-2}$ mM/mm (cf. Figure 2A / Vladimirov et al. 2008) étant rapportées ici au Tableau 1. En efffet, les RCS exercent leur influence sur 3 à 4 mm, d'où le coefficient $\sigma$ de 3,33 (Tableau 1). La dimension de la RDS par rapport à la PDS est donc estimée à environ 10% sur la base d'une étendue de la RDS sur 3 à 4 mm de part et d'autre chaque brin de RCS enfoui (Gaillard et al. 1999, 2000) espacés en moyenne de 36 mm. J'ai placé un contingent de 100 cellules azotobactériennes à mi-chemin entre ces deux brins (18 mm).

La composition du groupe récepteur (récepteurs Tar et Tsr) peut être définie par l'utilisateur, bien qu'ici le paramétrage proposée Vladimirov et al. 2008 est retenue. J'ai par contre modifié à titre d'analyse de sensibilité les ratios Kon/Koff Tar et Tsr sans détecter de différences notables au niveau des vitesses et étendue de la dérive. Idem pour ce qui est des niveaux de protéines CheA, CheR, CheB et CheY.

Notons que des vitesse (instantanée et linéaire) de l'ordre de 10 à 25 um/sec pour des azotobactéries plus que raisonnables (*supra* « Faisabilité agronomique ») étant donnée le nombre élevés de flagelles en présence (Hofer 1944, Rhodes 1965) par rapport à ceux (de 1 à 5) proposés initialement par Vladimirov et al. 2008 ; Haneline et al. 1991 rapportèrent des vitesses instantanées pour Azotobacter de 74 um/sec. Enfin, supposons que les constantes de dissociations (*supra*) des aPhen plus fortes que celles des oses/osides et acides aminés essayés par Vladimirov et al. 2008 et Mesibov et al. 1973.

J'ai rapporté au Tableau 1 les grandes lignes du paramétrage de RapidCell™ tel que piloté ici. *In fine,* ces modélisations - simulations indiquent donc clairement qu'un contingent distal de 100 azotobactéries peut très bien migrer, ou plus exactement dériver, à travers la PDS (pédosphère) vers la résiduphère (RDS) pendant la demi-vie des aPhen apportées par dCTX (Tableau 2).

dCTX est ici de 1,25 kg par hectare (0,0125 uM), soit au milieu de la gamme proposée. Les valeurs au Tableau 2 sont obtenues des graphes à la Figure 2. Quatre (4) cas de figures sont illustrés (de haut en bas) correspondant à des vitesses de déplacement linéaire et instantanées des azotobactéries de 10, 15, 20 et 25 um/sec, soit bien moins que celles proposées pour *Azotobacter vinelandii* par Haneline et al. 1991. Clairement, des vitesses de déplacement (instantanées) de l'ordre de 15 um/sec, bien en dessous des 74 um/sec rapportées par Haneline et al. 1991 permettent aux azotobactéries les plus distales (i.e. à 18 mm de la surface des RCS enfouis) de migrer (dériver) vers la RDS à 14 ou 15 mm.

**Tableau 2** : Modélisation RapidCell™ (cf. Tableau 1 et Figure 2). Les vitesses (moyennes) auxquelles dérivent un contingent de 100 cellules (azoto)bactériennes à travers la PDS et vers la RDS augmentent régulièrement selon leurs vitesses natatoires (instantanées) ; elles sont aussi supérieures avec des dCTX de 0,0125 mM.

| | Dérive (um/sec) | | Dérive maximale (mm) | |
|---|---|---|---|---|
| Vitesses natatoires des Azotobactéries (um/sec) | dCTX 0,001 mM | dCTX 0,0125 mM | dCTX 0,001 mM | dCTX 0,0125 mM |
| 10 (modélisation no. 8) | 5,60E-03 | 1,08E-02 | 4,5 | 9,4 |
| 15 (modélisation no. 5) | 7,80E-03 | 1,72E-02 | 6,7 | 14,9 |
| 20 (modélisation no. 7) | 9,30E-03 | 1,88E-02 | 8,1 | 16,3 |
| 25 (modélisation no. 4) | 7,00E-03 | 2,02E-02 | 5,9 | 17,5 |

Plus explicitement, et en accord avec l'hypothèse de travail selon laquelle la migration (dérive) que de 0,1 à 1% de la microflore (azoto)bactérienne vers la RDS suffira à densifier les populations azotobactériennes comme le fait l'inoculation des résidus de culture au sol (RCS ; Claude et Fillion 2004), il y a bel et bien accumulation avec dCTX minimale de 0,001 mM (100 g-aPhen/ha ; cf. Revendications), de 2 à 5% (Figure 3). Quatre vitesses natatoires instantanées, 10, 15, 20 et 25 um/sec (de haut en bas de la figure) ont modélisées (seule les vitesses des 20 um/sec sont rapportées ici), sachant que Haneline et al. 1991 rapportèrent pour *Azotobacter vinelandii* de telles vitesses de l'ordre de 75 um/sec ; ces modélisations sont donc conservatrices. Ces modélisations ont été réalisée avec le modèle RapidCell™ (Vladimirov et al. 2008, 2009 et 2010) selon le paramétrage rapporté au Tableau 1.

Plus appréciablement, cette accumulation des azotobactéries initialement distales est de l'ordre de 80% dès 3 jours post-enfouissement (Figure 3) voire près de 100% 10 jours (Figure 3 bis) post-enfouissement des résidus de culture au sol pour les dCTX moyens de 0,0125 mM (1,25 kg-aPhen/ha ; cf. Revendications). Notons que ces accumulations de cellules d'azotobactéries initialement les plus distales par rapport à la surface des brins de résidus de culture enfouis sont bien supérieures à celles proposées hypothétiquement nécessaires au fonctionnement ad minima de l'invention. Mieux, ces accumulations proviennent de la dérive des (azoto)bactéries les initialement plus distales par rapport à la RDS ; les azotobactéries initialement plus près, i.e. la vaste majorité des azotobactéries indigènes vont nécessairement s'accumuler dans la RDS encore plus rapidement et densément. Notons enfin que ce seront nécessairement et surtout les azotobactéries qui vont s'accumuler ainsi dans la RDS puisque ces molécules CTX aromatiques que sont les aPhen monomériques - énergétiquement très riches, sont expressément recherchées par les azotobactéries du sol (eg. Parales et Harwood 2002 et Lopez-de-Victoria et Lovelle 1993), vraisemblablement afin de satisfaire leurs besoins élevés en énergie (ATP) liés à leur activité diazotrophique.

**Tableau 1** : Paramétrage du modèle RapidCell™ repris pour l'essentiel de Vladimirov et al. 2008 et appliqué ici au modèle CTX de manière à simuler la migration *in situ* de cellules (azoto)bactériennes dérivant vers la *résidusphère* (RDS) à partir d'une position distale au sein de la *pédosphère* (PDS) à 18 mm de la surface des résidus de culture sur une période de 3 (604800 secondes) à 10 (864000 secondes) jours et à des vitesses natatoires instantanées de 10, 15, 20 et 25 um/seconde. Les résultats des modélisations 8, 5, 7 et 4 sont rapportées graphiquement aux Figures 3 et 4, ainsi qu'au Tableau 2.

| | modélisation / simulation (1 à 10 ) | | | | | | | | | |
|---|---|---|---|---|---|---|---|---|---|---|
| | 1 | 2 | 3 | 4 | 5 | 6 | 7 | 8 | 9 | 10 |
| nombre de cellules | 100 | 100 | 100 | 100 | 100 | 100 | 100 | 100 | 100 | 100 |
| durée de la modélisation (sec) | 604800 | 604800 | 604800 | 864000 | 864000 | 864000 | 864000 | 864000 | 864000 | 864000 |
| dimension espaces (mm²) | 36 (18x18) | 36 (18x18) | 36 (18x18) | 36 (18x18) | 36 (18x18) | 36 (18x18) | 36 (18x18) | 36 (18x18) | 36 (18x18) | 36 (18x18) |
| position initiale cellules (mm) | 18 ; 18 | 18 ; 18 | 18 ; 18 | 18 ; 18 | 18 ; 18 | 18 ; 18 | 18 ; 18 | 18 ; 18 | 18 ; 18 | 18 ; 18 |
| type de gradient | Gaussien (Gx) | Gaussien (Gx) | Gaussien (Gx) | Gaussien (Gx) | Gaussien (Gx) | Gaussien (Gx) | Gaussien (Gx) | Gaussien (Gx) | Gaussien (Gx) | Gaussien (Gx) |
| position initial gradient (mm) | 0 | 0 | 0 | 0 | 0 | 0 | 0 | 0 | 0 | 0 |
| coefficient sigma ($\sigma$) du gradient | 3,33 | 3,33 | 3,33 | 3,33 | 3,33 | 3,33 | 3,33 | 3,33 | 3,33 | 3,33 |
| dAttractif / dt (mM/sec) | 0,000 | 0,000 | 0,000 | 0,000 | 0,000 | **-0,000001** | 0,000 | 0,000 | 0,000 | 0,000 |
| nombre de flagelles | 12 | 12 | 12 | 12 | 12 | 12 | 12 | 12 | 12 | 12 |
| type de tropisme | Iso ... | **Aniso ...** | Iso ... | Iso ... | Iso ... | Iso ... | Iso ... | Iso ... | Iso ... | Iso ... |
| vitesse instantanée (um/sec) | **10** | 10 | **20** | **25** | **15** | 15 | **20** | **10** | 20 | 20 |
| dt intégration (sec) | 0,1 | 0,1 | 0,1 | 0,1 | 0,1 | 0,1 | 0,1 | 0,1 | 0,1 | 0,1 |
| dt rapporté (sec) | 60 | 60 | 60 | 60 | 60 | 60 | 60 | 60 | 60 | 60 |
| ratio $K^{on\text{-}off}$ Tar | 24 | 24 | 24 | 24 | 24 | 24 | 24 | 24 | 7 | 24 |
| ratio $K^{on\text{-}off}$ Tsr | 1,00E+04 | 1,00E+04 | 1,00E+04 | 1,00E+04 | 1,00E+04 | 1,00E+04 | 1,00E+04 | 1,00E+04 | 1,00E+04 | **1,00E+03** |
| **Nb. Le paramétrage restant est celui fournit par RapidCell™ (Vladimirov et al. 2008, 2009 et 2010)** | | | | | | | | | | |

**Références, bibliographie et brevets pertinents**

Alexandre, G, SE. Greer et IB. Zhulin. 2000. Energy Taxis Is the Dominant Behavior in Azospirillum brasilense. J. Bacteriol., pp. 6042-6048 Vol. 182, No. 21

Allard, B. 2006. A comparative study on the chemical composition of humic acids from forest soil, agricultural soil and lignite deposit Bound lipid, carbohydrate and amino acid distributions. Geoderma 130 (2006) 77-96 BLUM, U et SR SHAFER. 1988. MICROBIAL POPULATIONS AND PHENOLIC ACIDS IN SOIL. Soil Biol. Biochem. Vol. 20. No. 6. pp. 793-800.

Cipollini D, CM Rigsby et EK Barto. 2012. Microbes as Targets and Mediators of Allelopathy in Plants. J Chem Ecol (2012) 38:714-727

Gaby JC et Buckley DH. 2012. A Comprehensive Evaluation of PCR Primers to Amplify the nifH Gene of Nitrogenase. PLoS ONE 7(7): e42149. doi:10.1371/journal.pone.0042149

Claude, P-P. et L. Fillion. 2004. Effet de l'apport d'un inoculum bactérien aux résidus de culture de maïsgrain au sol sur le rendement et la qualité de blés d'hiver panifiables en France. Agrosol 15 (1) : 23-29 Clausznitzer D, Micali G, Neumann S, Sourjik V, Endres RG. 2014. Predicting Chemical Environments of Bacteria from Receptor Signaling. PLoS Comput Biol 10(10): e1003870. doi:10.1371/journal.pcbi.1003870 De Souza, Rocheli, Adriana Ambrosini et Luciane M.P. Passaglia. 2015. Plant growth-promoting bacteria as inoculants in agricultural soils. Genetics and Molecular Biology, 38, 4, 401-419 (2015)

Gaby, J-Ch et DH. Buckley. 2014. A comprehensive aligned nifH gène data base: a multipurpose tool for studies of nitrogen-fixing bacteria. Database Article ID bau001, doi:10.1093/database/bau001

Gaillard et al. 1999. Carbon, nitrogen and microbial gradients induces by plant residues decomposing in soil. Eur. J. Soil Sci. 50 : 567-578

Gaillard, V., C. Chenu et S. Recous. 2003. Carbon minéralisation in soil adjacent to plant residues of contrasting biochemical quality. Soil Biol. Biochem. 35 : 93-99

Haneline, S. CJ. Connelly et T Melton. 1991. Chemotactic Behavior of Azotobacter vinelandii. Appl. Environ. Microbiol., Mar. 1991, p. 825-829 Vol. 57, No. 3

Heller, Philip, H. James Tripp, Kendra Turk-Kubo et Jonathan P. Zehr. 2014. ARBitrator: a software pipeline for on-demand retrieval of auto-curated nifH sequences from GenBank. Bioinformatics 30(20) : 2883-2890 Hofer AW. 1944. Electron microscope studies on Azotobacter flagellation and Rhizobium bacteriophage. J. Bact., 47, 9-10.

Iman RL et WJ Conover. 1982. A distribution free approach to inducing rank corrélation among input variables. Commun. Statist.-Simula. Computa. 11(3) : 311-334

Izquierdo, Javier A. et Klaus Nüsslein. 2006. Distribution of Extensive nifH Gene Diversity Across Physical Soil Microenvironments. Microbial Ecology Volume 51, 441-452 (2006)

Johansen, JE, J Pinhassi, N Blackburn, UL Zweifel et Å Hagström. 2002. Variability in motility characteristics among marine bacteria. Aquat Microb Ecol 28: 229-237, 2002

Kumari. M, AJ Thatheyus et D Ramya. 2016. Biodégradation of Ferulic Acid Using Aspergillus fumigatus. Bulletin of Advanced Scientific Research 02 [06] (2016)

Lauffenburger, D, R Aris et K Keller. 1982. Effects of cell motility and chemotaxis on microbial population growth. BIOPHYS. J. Volume 40 December 1982, pp. 209-219

Lopez-de-Victoria, G et C.R. Lovell. 1993. Chemotaxis of Azospirillum Species to Aromatic Compounds. Appl. Environ. Microbiol., Sept. 1993, p. 2951-2955 Vol. 59, No. 9

Martens DA. 2000. Plant residue biochemistry regulates soil carbon cycling and carbon séquestration. Soil Biology & Biochemistry 32 : 361-369

Martens DA. 2000 bis. Management and Crop Residue Influence Soil Aggregate Stability. Journal of Environmental Quality 29 : 723-727.

Martens DA. 2002. Identification of Phenolic Acid Composition of Alkali-extracted Plants and Soils. Soil Sci. Soc. Am. J. 66 : 1240-1248.

Martens DA. 2002 bis. Relationship Between Plant Phenolic Acids Released during Soil Mineralization and Aggregate Stabilization. Soil Sci. Soc. Am. J. 66 : 1857-1867.

Mason-Jones, Kyle et Yakov Kuzyakov. 2017. Non-metabolizable glucose analogue shines new light on priming mechanisms: Triggering of microbial metabolism. Soil Biology & Biochemistry 107 : 68-76

Mesibov, R, GW Ordal et J Adler. 1973. The Range of Attractant Concentrations for Bacterial Chemotaxis and the Threshold and Size of Response over This Range. J. Gen. Physiol. 62 : 203-223

Nunan,N, K Wu, IM Young, JW Crawford et K Ritz. 2003. Spatial distribution of bacterial communities and their relationships with the micro-architecture of soil. FEMS Microbiology Ecology 44 : 203-215

Orr, CH, A James, C Leifert, JM Cooper et SP Cummings. 2011. Diversity and Activity of Free-Living Nitrogen-Fixing Bacteria and Total Bacteria in Organic and Conventionally Managed Soils. Appl. Environ. Microbiol. 77(3) : 911-919

Parales RE et CS Harwood. 2002. Bacterial chemotaxis to pollutants and plant-derived aromatic molécules. Current Opinion in Microbiology 2002, 5:266-273

POUILLOT R, ML DELIGNETTE-MULLER, DL KELLY et JB DENIS. 2016. A Manual for mc2d : Tools for Two-Dimensional Monte-Carlo Simulations. Documentation pdf R-Studio (cf. mc2d)

Rhodes ME. 1965. Flagellation as a Criterion for the Classification of Bacteria. BACTERIOLOGICAL REVIEWS 29(4) : 442-465

Shindo H, T Marumoto et T Higashi. 1979. Behavior of phenolic substances in the decaying process of plants. Soil Science and Plant Nutrition, 25(4) : 591-600, DOI: 10.1080/00380768.1979.10433199

Szurmant H et GW Ordal. 2004. Diversity in Chemotaxis Mechanisms among the Bacteria and Archaea. Microbiology and Molecular Biology Reviews, pp. 301-319 Vol. 68, No. 2

Tien S-M, Hsu C-Y, Chen B-S 2016. Engineering Bacteria to Search for Spécifie Concentrations of Molécules bya Systematic Synthetic Biology Design Method. PLoS ONE 11(4): e0152146

Uday-Bhaskar RVS, R Karmakar, D Deepika, MS Tirumkudulu et KV Venkatesh. 2015. Variation of swimming speed enhances the chemotactic migration of Escherichia coli. Syst Synth Biol 9:85-95

Wu FJ, J Moreno et GR Vela. 1987. Growth of Azotobacter vinelandii on Soil Nutrients. Appl. Environ. Microbiol. 53(3) : 489-494

Vladimirov, N et V Sourjik. 2009. Chemotaxis: how bacteria use memory. Biol. Chem., Vol. 390 ; 1097-1104 Vladimirov N, Lovdok L, Lebiedz D, Sourjik V (2008) Dependence of Bacterial Chemotaxis on Gradient Shape and Adaptation Rate. PLoS Comput Biol 4(12): e1000242. doi:10.1371/journal.pcbi.1000242

Vladimirov N, Lebiedz D, Sourjik V (2010) Predicted Auxiliary Navigation Mechanism of Peritrichously Flagellated Chemotactic Bacteria. PLoS Comput Biol 6(3): e1000717. doi:10.1371/journal.pcbi.1000717

## Revendications

1. Procédé de fertilisation azotobactérienne pour grandes cultures agronomiques *sans* inoculation des résidus de culture cellulosiques répandus au sol après la récolte de la culture précédente comportant la mise en contacte exprès d'agents chimiotaxiques et des susdits résidus de culture au sol avant enfouissement et **caractérisé en ce que** lesdits agents chimiotaxiques permettant un mouvement des azotobactéries du sol vers la résidusphère (RDS) sont choisis parmi l'une quelconque des catégories suivantes ;

   • des analogues non-métabolisables d'ose et d'osides
   • des préparations composées d'acides humiques et/ou fulviques
   • des composés aromatiques de la classe des arènes

   et **en ce que** les susdits agents chimiotaxiques sont apportés aux et mis en contact avec les susdits résidus de culture avant leur enfouissement par pulvérisation liquide ou solide, ou encore par vectorisation, et cela en quantités réduites, à savoir ;

   • de 0,5 à 10 kg par hectare pour ce qui est des analogues non-métabolisables d'ose et d'osides, et avantageusement de 1 kg par hectare
   • de 0,5 à 5 kg par hectare pour ce qui est des préparation composées d'acides humiques et/ou fulviques (AHF), et avantageusement de 1 kg par hectare
   • de 0,1 à 2,5 kg par hectare pour ce qui est des composés aromatiques de la classe des arènes, et avantageusement de 1 kg par hectare.

2. Procédé

   de fertilisation azotobactérienne pour grandes cultures agronomiques sans inoculation selon la première revendication **caractérisé en ce que** ;

   • les analogues non-métabolisables d'ose et d'osides sont choisis parmi un groupe comprenant (i) a-methyl-D-glucoside et/ou le 2-deoxy-D-glucose, (ii) 2-deoxy-D-ribose)et (iii) 2-deoxy-galactose à titre d'analogues non métabolisable du glucose, du ribose et du galactose, respectivement,
   • les préparations composées d'acides humiques et/ou fulviques (AHF) sont choisi parmi un groupe comprenant des préparation solides et granulaires épandables au champs et dont les teneurs en AHF sont comprises entre 15 et 90% p/p
   • des composés aromatiques de la classe des arènes sont choisis parmi un groupe comprenant des acides phénoliques monomériques et/ou leurs sels tels que l'acide vanillique, coumarique, férulique, benzoïque, caféique et syringique ainsi que le protocatechuate, 4-hydroxybenzoate et le catéchol.

3. Procédé de fertilisation azotobactérienne pour grandes cultures agronomiques sans inoculation selon une quelconque des revendications précédentes **caractérisé en ce que** les résidus de culture cellulosiques répandus au sol proviennent de cultures précédentes de céréales, notamment le blé tendre d'hiver, de colza, de maïs-grain et de sorgho, voire de tournesol.

4. Procédé de fertilisation azotobactérienne pour grandes cultures agronomiques sans inoculation selon une quelconque des revendications précédentes **caractérisé en ce que** les grandes cultures agronomiques sont choisies parmi un groupe comprenant les céréales d'hivers, y compris notamment le blé tendre d'hiver, le colza, le lin, voire les cultures intermédiaires pièges à nitrates (cipan) non-*Fabaceae*.

5. Procédé de fertilisation azotobactérienne pour grandes cultures agronomiques sans inoculation selon une quelconque des revendications précédentes **caractérisé en ce que** l'enfouissement desdits résidus de culture s'effectue par labourage et préparation du lit de semence, voire plus avantageusement par TCS (techniques culturales simplifiées) sur 8 à 15 cm de profondeur, à l'exclusion cependant du semis direct.

## Patentansprüche

1. Verfahren zur Stickstoff-Bakterien-Düngung für agronomische Feldfrüchte *ohne* Inokulation von zellulosehaltigen Pflanzenrückständen, die nach der Ernte der Vorkultur, die das ausdrückliche Inkontaktbringen von chemotaktischen Mitteln und den genannten Bodenkulturrückständen vor dem Vergraben umfasst, und **dadurch gekennzeichnet, dass** die genannten chemotaktischen Mittel, die eine Bewegung der Azotobakterien vom Boden in die Restsphäre (RDS) ermöglichen, aus einer der folgenden Kategorien ausgewählt sind;

• nicht metabolisierbare Analoga von Ösen und Osiden
• Zubereitungen, die aus Humin- und/oder Fulvosäuren bestehen
• aromatische Verbindungen aus der Klasse der Arenen

und dass die oben genannten chemotaktischen Mittel zu den und in Kontakt mit den genannten Pflanzenrückständen vor dem Vergraben durch flüssige oder feste Zerstäubung oder durch Vektorisierung, und zwar in geringen Mengen, nämlich;

• von 0,5 bis 10 kg pro Hektar in Bezug auf nicht metabolisierbare Analoge von Ösen und Osiden und vorzugsweise von 1 kg pro Hektar
• 0,5 bis 5 kg pro Hektar bei Präparaten, die aus Humus- und/oder Fulvosäuren (HFA) bestehen, und vorzugsweise 1 kg pro Hektar
• von 0,1 bis 2,5 kg pro Hektar in Bezug auf aromatische Verbindungen aus der Klasse der Arenen, und vorzugsweise von 1 kg pro Hektar.

2. Verfahren zur azotobakteriellen Düngung von agronomischen Feldfrüchten ohne Inokulation nach dem ersten Anspruch, **dadurch gekennzeichnet, dass**;

• die nicht-metabolisierbaren Analoga von Ösen und Osiden aus einer Gruppe ausgewählt sind, die (i) a-Methyl-D-glucosid und/oder 2-Deoxy-D-glucose, (ii) 2- Deoxy-D-
Ribose) und (iii) 2-Deoxygalactose als nicht metabolisierbare Analoga von Glucose, Ribose bzw. Galactose umfasst,
• die Zubereitungen, die aus Humin- und/oder Fulvosäuren (AHF) bestehen, aus einer Gruppe ausgewählt sind, die feste und körnige Zubereitungen umfasst, die auf dem Feld ausgebracht werden können und deren AHF-Gehalte zwischen 15 und 90 Gew.-% liegen
• aromatische Verbindungen aus der Klasse der Arenen aus einer Gruppe ausgewählt werden, die monomere Phenolsäuren und/oder deren Salze wie Vanillin-, Cumar-, Ferulin-, Benzo-, Kaffee- und Syringsäure sowie Protocatechuat, 4-Hydroxybenzoat und Catechol umfasst.

3. Verfahren zur azotobakteriellen Düngung von landwirtschaftlichen Ackerkulturen ohne Impfung nach einem der vorhergehenden Ansprüche, **dadurch gekennzeichnet, dass** die auf den Boden gestreuten zellulosehaltigen Kulturrückstände von vorherigen Kulturen von Getreide, insbesondere Winterweichweizen, Raps, Körnermais und Sorghum stammen, bzw.
von Sonnenblumen.

4. Verfahren zur azotobakteriellen Düngung von landwirtschaftlichen Feldfrüchten ohne Inokulation nach einem der vorhergehenden Ansprüche, **dadurch gekennzeichnet, dass** die landwirtschaftlichen Feldfrüchte aus einer Gruppe ausgewählt werden, die Folgendes umfasst:
Wintergetreide, einschließlich insbesondere Winterweichweizen, Raps, Flachs und sogar Nitrat-Zwischenfrüchte, die nicht zu den *Fabaceae* gehören.

5. Verfahren zur azotobakteriellen Düngung von agronomischen Feldkulturen ohne Impfung nach einem der vorhergehenden Ansprüche, **dadurch gekennzeichnet, dass** das Vergraben der genannten Ernterückstände erfolgt durch Pflügen und Saatbettbereitung oder, noch vorteilhafter, durch vereinfachte Anbautechniken (VSK) in einer Tiefe von 8 bis 15 cm, wobei jedoch die Direktsaat ausgeschlossen ist.

## Claims

1. A process for azotobacterial fertilization of agronomic field crops *without* inoculation of cellulosic crop residues spread on the ground after the harvest of the preceding crop, comprising the express contact of chemotactic agents and the aforesaid crop residues on the ground before burial and **characterized in that** said chemotactic agents allowing a movement of azotobacteria from the soil to the residue (RDS) are selected from one of any of the following categories;

• non-metabolizable analogues of ose and osides
• preparations composed of humic and/or fulvic acids

• aromatic compounds of the arena class

and **in that** the aforesaid chemotaxic agents are applied to and brought into contact with the aforesaid crop residues before their burial by liquid or solid spraying, or by vectorization, and this in reduced quantities, namely;

• 0.5 to 10 kg per hectare for non-metabolizable analogues of bone and ossides, and advantageously 1 kg per hectare

• from 0.5 to 5 kg per hectare for preparations composed of humic and/or fulvic acids (HFAs), and advantageously from 1 kg per hectare

• from 0.1 to 2.5 kg per hectare for aromatic compounds of the arena class, and advantageously from 1 kg per hectare.

2. Azotobacterial fertilization process for agronomic field crops without inoculation according to the first claim, **characterized in that**;

   • non-metabolizable analogues of OSE and osides are selected from a group comprising (i) a-methyl-D-glucoside and/or 2-deoxy-D-glucose, (ii) 2-deoxy-D-ribose) and (iii) 2-deoxy-galactose as non-metabolizable analogues of glucose, ribose and galactose, respectively,

   • preparations composed of humic and/or fulvic acids (HFAs) are selected from a group of solid and granular preparations that can be applied in the field and whose AHF content is between 15 and 90% w/w

   • Aromatic compounds of the arena class are selected from a group comprising monomeric phenolic acids and/or their salts such as vanillic, coumaric, ferulic, benzoic, caffeic and syringic acids as well as protocatechuate, 4-hydroxybenzoate and catechol.

3. A process for azotobacterial fertilization of agronomic field crops without inoculation according to any of the preceding claims, **characterized in that** the cellulosic crop residues spread on the soil are derived from previous cereal crops, in particular soft winter wheat, rapeseed, grain maize and sorghum, or even sunflower.

4. A process for azotobacterial fertilization of agronomic field crops without inoculation according to any of the preceding claims, **characterized in that** the agronomic field crops are selected from a group comprising winter cereals, including in particular soft winter wheat, rapeseed, flaxseed, or even non-Fabaceae nitrate-trapping intermediate crops (cipan).

5. A process for azotobacterial fertilization of agronomic field crops without inoculation according to any of the preceding claims, **characterized in that** the burial of said crop residues is carried out by ploughing and seedbed preparation, or even more advantageously by TCS (simplified cultivation techniques) to a depth of 8 to 15 cm, excluding however direct seeding.

**Figure 1**

**Figure 2**

**Répartition densité cellulaire / dCTX 0,001 mM**

**Répartition densité cellulaire / dCTX 0,0125 mM**

**Figure 3**

**Répartition densité cellulaire / dCTX 0,001 mM**

**Répartition densité cellulaire / dCTX 0,0125 mM**

**Figure 3 bis**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2833016 A1
- EP 2213154 A
- EP 2845906 A
- EP 17196251
- EP 10366006 A
- EP 10366005
- EP 10366002
- EP 10366006

**Littérature non-brevet citée dans la description**

- **WHITEHEAD et al.** *Soil Biol. Biochem.*, 1983, vol. 15 (2), 133-136
- **WANG et al.** Environmental behavior of phenolic acids dominated their rhizdeposition in boréal poplar plantation forest soils. *J. Soils Sédiments*, 2016, vol. 16, 1858-70
- **ALEXANDRE, G** ; **SE. GREER** ; **IB. ZHULIN**. Energy Taxis Is the Dominant Behavior in Azospirillum brasilense. *J. Bacteriol.*, 2000, vol. 182 (21), 6042-6048
- **ALLARD, B.** A comparative study on the chemical composition of humic acids from forest soil, agricultural soil and lignite deposit Bound lipid, carbohydrate and amino acid distributions. *Geoderma*, 2006, vol. 130, 77-96
- **BLUM, U** ; **SR SHAFER**. MICROBIAL POPULATIONS AND PHENOLIC ACIDS IN SOIL. *Soil Biol. Biochem.*, 1988, vol. 20 (6), 793-800
- **CIPOLLINI D** ; **CM RIGSBY** ; **EK BARTO**. Microbes as Targets and Mediators of Allelopathy in Plants. *J Chem Ecol*, 2012, vol. 38, 714-727
- **GABY JC** ; **BUCKLEY DH**. A Comprehensive Evaluation of PCR Primers to Amplify the nifH Gene of Nitrogenase. *PLoS ONE*, 2012, vol. 7 (7), e42149
- **CLAUDE, P-P.** ; **L. FILLION**. Effet de l'apport d'un inoculum bactérien aux résidus de culture de maïsgrain au sol sur le rendement et la qualité de blés d'hiver panifiables en France. *Agrosol*, 2004, vol. 15 (1), 23-29
- **CLAUSZNITZER D** ; **MICALI G** ; **NEUMANN S** ; **SOURJIK V** ; **ENDRES RG**. Predicting Chemical Environments of Bacteria from Receptor Signaling. *PLoS Comput Biol*, 2014, vol. 10 (10), e1003870
- **DE SOUZA, ROCHELI** ; **ADRIANA AMBROSINI** ; **LUCIANE M.P. PASSAGLIA**. Plant growth-promoting bacteria as inoculants in agricultural soils. *Genetics and Molecular Biology*, 2015, vol. 38 (4), 401-419
- **GABY, J-CH** ; **DH. BUCKLEY**. *A comprehensive aligned nifH gène data base: a multipurpose tool for studies of nitrogen-fixing bacteria*, 2014
- **GAILLARD et al.** Carbon, nitrogen and microbial gradients induces by plant residues decomposing in soil. *Eur. J. Soil Sci.*, 1999, vol. 50, 567-578
- **GAILLARD, V.** ; **C. CHENU** ; **S. RECOUS**. Carbon minéralisation in soil adjacent to plant residues of contrasting biochemical quality. *Soil Biol. Biochem.*, 2003, vol. 35, 93-99
- **HANELINE, S.** ; **CJ. CONNELLY** ; **T MELTON**. Chemotactic Behavior of Azotobacter vinelandii. *Appl. Environ. Microbiol.*, March 1991, vol. 57 (3), 825-829
- **HELLER, PHILIP, H.** ; **JAMES TRIPP** ; **KENDRA TURK-KUBO** ; **JONATHAN P. ZEHR.** ARBitrator: a software pipeline for on-demand retrieval of auto-curated nifH sequences from GenBank. *Bioinformatics*, 2014, vol. 30 (20), 2883-2890
- **HOFER AW**. Electron microscope studies on Azotobacter flagellation and Rhizobium bacteriophage. *J. Bact.*, 1944, vol. 47, 9-10
- **IMAN RL** ; **WJ CONOVER**. A distribution free approach to inducing rank corrélation among input variables. *Commun. Statist.-Simula. Computa.*, 1982, vol. 11 (3), 311-334
- **IZQUIERDO, JAVIER A.** ; **KLAUS NÜSSLEIN**. Distribution of Extensive nifH Gene Diversity Across Physical Soil Microenvironments. *Microbial Ecology*, 2006, vol. 51, 441-452
- **JOHANSEN, JE** ; **J PINHASSI** ; **N BLACKBURN** ; **UL ZWEIFEL** ; **Å HAGSTRÖM**. Variability in motility characteristics among marine bacteria. *Aquat Microb Ecol*, 2002, vol. 28, 229-237
- **KUMARI. M** ; **AJ THATHEYUS** ; **D RAMYA**. Biodégradation of Ferulic Acid Using Aspergillus fumigatus. *Bulletin of Advanced Scientific Research*, 2016, vol. 02

- **LAUFFENBURGER, D** ; **R ARIS** ; **K KELLER**. Effects of cell motility and chemotaxis on microbial population growth. *BIOPHYS. J.*, December 1982, vol. 40, 209-219
- **LOPEZ-DE-VICTORIA, G** ; **C.R. LOVELL**. Chemotaxis of Azospirillum Species to Aromatic Compounds. *Appl. Environ. Microbiol.*, September 1993, vol. 59 (9), 2951-2955
- **MARTENS DA**. Plant residue biochemistry regulates soil carbon cycling and carbon séquestration. *Soil Biology & Biochemistry*, 2000, vol. 32, 361-369
- **MARTENS DA**. Management and Crop Residue Influence Soil Aggregate Stability. *Journal of Environmental Quality*, 2000, vol. 29, 723-727
- **MARTENS DA**. Identification of Phenolic Acid Composition of Alkali-extracted Plants and Soils. *Soil Sci. Soc. Am. J.*, 2002, vol. 66, 1240-1248
- **MARTENS DA**. Relationship Between Plant Phenolic Acids Released during Soil Mineralization and Aggregate Stabilization. *Soil Sci. Soc. Am. J.*, 2002, vol. 66, 1857-1867
- **MASON-JONES, KYLE** ; **YAKOV KUZYAKOV**. Non-metabolizable glucose analogue shines new light on priming mechanisms: Triggering of microbial metabolism. *Soil Biology & Biochemistry*, 2017, vol. 107, 68-76
- **MESIBOV, R** ; **GW ORDAL** ; **J ADLER**. The Range of Attractant Concentrations for Bacterial Chemotaxis and the Threshold and Size of Response over This Range. *J. Gen. Physiol.*, 1973, vol. 62, 203-223
- **NUNAN, N** ; **K WU** ; **IM YOUNG** ; **JW CRAWFORD** ; **K RITZ**. Spatial distribution of bacterial communities and their relationships with the micro-architecture of soil. *FEMS Microbiology Ecology*, 2003, vol. 44, 203-215
- **ORR, CH** ; **A JAMES** ; **C LEIFERT** ; **JM COOPER** ; **SP CUMMINGS**. Diversity and Activity of Free-Living Nitrogen-Fixing Bacteria and Total Bacteria in Organic and Conventionally Managed Soils. *Appl. Environ. Microbiol.*, 2011, vol. 77 (3), 911-919
- **PARALES RE** ; **CS HARWOOD**. Bacterial chemotaxis to pollutants and plant-derived aromatic molécules. *Current Opinion in Microbiology*, 2002, vol. 5, 266-273
- **POUILLOT R** ; **ML DELIGNETTE-MULLER** ; **DL KELLY** ; **JB DENIS**. *A Manual for mc2d : Tools for Two-Dimensional Monte-Carlo Simulations*, 2016
- **RHODES ME**. Flagellation as a Criterion for the Classification of Bacteria. *BACTERIOLOGICAL REVIEWS*, 1965, vol. 29 (4), 442-465
- **SHINDO H** ; **T MARUMOTO** ; **T HIGASHI**. Behavior of phenolic substances in the decaying process of plants. *Soil Science and Plant Nutrition*, 1979, vol. 25 (4), 591-600
- **SZURMANT H** ; **GW ORDAL**. Diversity in Chemotaxis Mechanisms among the Bacteria and Archaea. *Microbiology and Molecular Biology Reviews*, 2004, vol. 68 (2), 301-319
- **TIEN S-M** ; **HSU C-Y** ; **CHEN B-S**. Engineering Bacteria to Search for Spécifie Concentrations of Molécules bya Systematic Synthetic Biology Design Method. *PLoS ONE*, 2016, vol. 11 (4), e0152146
- **UDAY-BHASKAR RVS** ; **R KARMAKAR** ; **D DEEPIKA** ; **MS TIRUMKUDULU** ; **KV VENKATESH**. Variation of swimming speed enhances the chemotactic migration of Escherichia coli. *Syst Synth Biol*, 2015, vol. 9, 85-95
- **WU FJ** ; **J MORENO** ; **GR VELA**. Growth of Azotobacter vinelandii on Soil Nutrients. *Appl. Environ. Microbiol.*, 1987, vol. 53 (3), 489-494
- **VLADIMIROV, N** ; **V SOURJIK**. Chemotaxis: how bacteria use memory. *Biol. Chem.*, 2009, vol. 390, 1097-1104
- **VLADIMIROV N** ; **LOVDOK L** ; **LEBIEDZ D** ; **SOURJIK V**. Dependence of Bacterial Chemotaxis on Gradient Shape and Adaptation Rate. *PLoS Comput Biol*, 2008, vol. 4 (12), e1000242
- **VLADIMIROV N** ; **LEBIEDZ D** ; **SOURJIK V**. Predicted Auxiliary Navigation Mechanism of Peritrichously Flagellated Chemotactic Bacteria. *PLoS Comput Biol*, 2010, vol. 6 (3), e1000717